Europäisches Patentamt

European Patent Office

Office européen des brevets

(11) Numéro de publication: **0 291 413**
A1

# DEMANDE DE BREVET EUROPEEN

(21) Numéro de dépôt: 88401163.6

(22) Date de dépôt: 11.05.88

(51) Int. Cl.4: **B 65 B 25/02**
B 65 D 85/50

(30) Priorité: 11.05.87 FR 8706566

(43) Date de publication de la demande:
17.11.88 Bulletin 88/46

(84) Etats contractants désignés:
AT BE CH DE ES FR GB GR IT LI LU NL SE

(71) Demandeur: **Kunstmann, Michel**
**F-30390 Aramon (FR)**

(72) Inventeur: **Kunstmann, Michel**
**F-30390 Aramon (FR)**

(74) Mandataire: **Martin, Jean-Jacques et al**
**Cabinet REGIMBEAU 26, Avenue Kléber**
**F-75116 Paris (FR)**

(54) **Procédé d'emballage de fleurs coupées en particulier de roses, arrangées en bouquet, et articles obtenus par la mise en oeuvre dudit procédé.**

(57) L'invention concerne un procédé d'emballage de fleurs coupées, permettant le transport et la conservation d'une pluralité de fleurs arrangées en bouquet.

Selon l'invention, on met en place un gobelet ou sac analogue dans lequel on dispose un matériau favorable à l'humidité et/ou la conservation des fleurs, puis on met en place les tiges des fleurs à emballer dans le gobelet ainsi garni. On dispose ensuite un sachet enveloppant l'ensemble obtenu, dans lequel on emprisonne un volume d'atmosphère contrôlée grâce à un mélange gazeux inerte injecté dans le sachet avant un thermoscellage des bords de celui-ci. Enfin, par thermorétraction, on applique la portion inférieure du sachet sur le gobelet de façon à conférer à la base du bouquet la tenue mécanique désirée. Application notamment au transport et à la conservation d'une pluralité de roses.

## Description

### PROCEDE D'EMBALLAGE DE FLEURS COUPEES, EN PARTICULIER DE ROSES, ARRANGEES EN BOUQUET, ET ARTICLES OBTENUS PAR LA MISE EN OEUVRE DUDIT PROCEDE.

L'invention concerne un procédé d'emballage de fleurs coupées, permettant le transport et la conservation d'une pluralité de fleurs, en particulier de roses, arrangées en bouquet.

En général, lors de leur expédition, les fleurs coupées voyagent couchées dans de simples boîtes en carton, privées de toute eau.

Il est évidemment tentant de développer une technique d'emballage permettant un transport des fleurs coupées dans de bonnes conditions d'humidité. De plus, il est intéressant de faire en sorte que cette technique confère aux tiges une certaine tenue mécanique, afin d'éviter les déplacements relatifs et des frottements indésirables.

Il a été proposé de réaliser un emballage constitué par une caisse rigide dans la partie inférieure de laquelle est maintenu un récipient étanche pour renfermer une quantité apparopriée de liquide de conservation et dont la paroi latérale comporte, au-dessus du bord supérieur libre dudit récipient, une ligne transversale amincie associée à un moyen de déchirage pour la découpe aisée de ladite paroi en vue de la présentation des fleurs contenues. Une telle solution, par exemple illustrée dans le brevet français N° 2 463 075, est économique et simple, mais elle n'est pas satisfaisante pour un bouquet de roses qui peut être couché lors de son transport : le problème de l'étanchéité de l'emballage n'est pas résolu de façon satisfaisante, et les tiges ne sont aucunement maintenues contre elles, étant simplement disposées dans le récipient comme dans un vase en forme de pot.

Il a été également proposé de perfectionner la technique précédente, avec un emballage comportant un récipient en forme de boîte de hauteur suffisante pour recevoir entièrement des fleurs coupées disposées en position verticale, le récipient comportant au moins à sa partie inférieure une cuvette en matière imperméable, alors que les côtés du récipient portent, au-dessus du niveau supérieur de la cuvette, des indications en vue d'un découpage, un élément étant prévu pour former, au moins dans l'état découpé du récipient, un support s'étendant audessus de la cuvette et pourvu d'au moins un orifice pour le passage et le maintien des tiges des fleurs. Cette solution, par exemple illustrée dans le brevet français N° 2 340 260, est plus élaborée que la précédente, mais implique encore un transport en position verticale. Le maintien des tiges est un peu meilleur que précédemment, mais reste peu efficace si l'on veut emballer un bouquet de plusieurs roses.

En fait, ces types de solutions montrent que les efforts de développement se sont fréquemment tournés vers des solutions de mise en place dans des emballages cartonnés, avec un récipient d'eau à l'intérieur pour améliorer la conservation des fleurs, l'avantage résidant dans la simplicité, et une certaine protection des fleurs en cas d'empilement de ces emballages. L'idée directrice a été en réalité de générer un emballage en forme de boîte rigide formant aisément un présentoir, soit par une ligne de déchirement prédéterminée comme dans les deux brevets précités, soit en prévoyant un panneau de la boîte qui est transparent (voir par exemple le brevet français N° 2 332 924).

Certaines techniques ont été essayées pour tenter de résoudre le problème du transport et de la conservation des fleurs coupées, de façon que l'on puisse supprimer tout risque de perte ou de projection d'eau, et préserver de ce fait l'ambiance humide.

Selon une première approche, on a proposé d'utiliser un corps creux en matière plastique transparente, ledit corps comportant un fond pourvu d'une embase pour lui assurer une certaine stabilité, une épaisseur de mousse de matière plastique absorbante étant déposée sur ledit fond : avec un tel emballage, on imprègne d'eau la mousse synthétique absorbante, et les fleurs sont, par leur tige, engagées dans ladite mousse. Cette solution, par exemple illustrée dans le brevet français N° 2 272 914, est relativement économique, mais l'emballage obtenu n'est pas parfaitement étanche ; de ce fait, lorsque l'emballage est renversé ou couché, l'eau peut s'échapper du produit imprégné d'eau, et sortir de l'emballage.

Pour remédier à cet inconvénient, on a alors proposé, selon une deuxième approche, de réaliser un emballage gonflable fixé à l'intérieur d'une poche allongée dont l'extrémité supérieure est ouverte pour recevoir les tiges d'un bouquet de fleurs coupées ; un anneau gonflable est fixé à l'intérieur de la poche, permettant notamment de recevoir et retenir une certaine quantité de liquide : lorsque l'anneau gonflable est dilaté, l'emballage peut être renversé sans risque d'échappement du liquide. Cette solution, par exemple illustrée dans le brevet français N° 2 305 121, est cependant complexe et onéreuse ; de plus, l'utilisation d'organes gonflables est souvent incompatible avec la présence d'épines rigides, de sorte que cet emballage ne conviendrait pas pour des roses. Enfin, le produit réalisé, s'il est efficace pour ce qui est de l'étanchéité, reste particulièrement inesthétique, et ne saurait convenir pour une présentation directe d'un bouquet emballé.

L'état de la technique est également illustré par des techniques de conservation des fleurs, mais en pot et non coupées, utilisant une atmosphère gazeuse contrôlée. On peut par exemple citer le brevet français N° 2 467 796. Plus généralement d'ailleurs, on a aussi proposé des procédés d'emballage de produits végétaux, notamment des salades, utilisant un emballage souple mince, fermé, opaque à la lumière, et ayant de faibles perméabilités vis à vis de l'oxygène, du gaz carbonique et de la vapeur d'eau : ces différentes solutions, par exemple illustrées dans le brevet français N° 2 581 626, ne sont cependant pas directement transposables au domaine non-alimentaire, et en particulier celui des fleurs coupées.

L'invention a pour objet de réaliser un procédé d'emballage de fleurs coupées arrangées en bouquet, convenant plus particulièrement pour le transport et la conservation de roses coupées, procédé qui ne présente pas les inconvénients qui ont été mentionnés ci-dessus.

Un autre objet de l'invention est de réaliser un procédé qui soit simple et apte à une mise en oeuvre en continu.

Un autre objet de l'invention est de préserver un caractère esthétique dans la présentation du bouquet, grâce à un emballage rappelant, par sa forme finale, celui que le fleuriste met en place manuellement.

Il s'agit plus particulièrement d'un procédé d'emballage de fleurs coupées, permettant le transport et la conservation d'une pluralité de fleurs, en particulier de roses, arrangées en bouquet, caractérisé en ce qu'il comporte les étapes suivantes :

a) on met en place un petit gobelet ou sac analogue, fermé à son extrémité inférieure,

b) on dispose dans le gobelet un matériau fibreux, liquide, ou pâteux, apte à communiquer aux plantes une bonne humidité tout en favorisant leur conservation,

c) on met en place les tiges des fleurs coupées à emballer dans le gobelet ainsi garni,

d) on dispose autour de l'ensemble un grand sachet en forme de manchon ouvert à ses extrémités inférieure et supérieure, ledit sachet, réalisé en matière plastique thermosoudable et présentant une bonne résistance à la perforation, enveloppant ainsi ledit ensemble en s'étendant au-dessus des fleurs du bouquet,

e) on injecte dans le sachet un mélange gazeux inerte favorisant la conservation, et on obture ledit sachet en thermoscellant ses bords supérieur et inférieur, de façon à emprisonner l'ensemble dans une atmosphère contrôlée,

f) on applique, de préférence en utilisant une technique de thermorétraction, la portion inférieure du sachet sur le globelet, de façon à conférer à la base du bouquet la tenue mécanique désirée.

Selon une première variante, il est prévu qu'on utilise un gobelet en matière souple et thermorétractable, de préférence du polychlorure de vinyle, et qu'entre les étapes c) et d) on procède à une étape r) de thermorétraction dudit gobelet, ce qui rigidifie la base du bouquet tout en assurant un bon contact entre les tiges et le matériau disposé dans le gobelet ; en particulier, le gobelet présente à plat une forme sensiblement rectangulaire, ayant environ 20 cm. de hauteur et 4 à 5 cm. de largeur pour le côté fermé.

Selon une deuxième variante, il est prévu qu'on utilise un gobelet rigide ou semi-rigide, de forme essentiellement cylindrique ou tronconique, avec un fond en partie inférieure, et que la portion inférieure du sachet appliquée sur le gobelet lors de l'étape f) concerne au moins la hauteur dudit gobelet.

Dans les deux cas, il est possible d'utiliser un sachet réalisé à partir d'un film plastique mince, nonthermorétractable : dans ce cas, après l'étape e), on procède à la mise en place d'un manchon thermorétractable, dont la hauteur est de préférence comparable à celle du gobelet, et l'application de la portion inférieure du sachet sur le gobelet lors de l'étape f) ainsi modifiée est obtenue par thermorétraction dudit manchon. Avantageusement, le film du sachet présente alors une très faible perméabilité à la vapeur d'eau et aux gaz constituant le mélange gazeux à injecter dans ledit sachet, et est réalisé de préférence en polyester barrière transparent.

Avec les mêmes deux possibilités précitées, il est aussi possible d'utiliser un sachet réalisé à partir d'un film plastique thermorétractable : dans ce cas, l'application de la portion inférieure du sachet sur le gobelet lors de l'étape f) est obtenue par thermorétraction de ladite portion elle-même. Avantageusement, le film du sachet présente une très faible perméabilité à la vapeur d'eau et aux gaz constituant le mélange gazeux à injecter dans ledit sachet, et est réalisé de préférence en polychlorure de vinyle, polycarbonate ou polypropyléne. A titre indicatif, le sachet présente une forme sensiblement tronconique, ayant environ 80 à 90 cm. de hauteur, et environ 10 et 20 cm. pour les bases du trapèze que forme le sachet à plat.

En particulier, lorsque l'on utilise un gobelet souple et un sachet réalisés à partir d'un film thermorétractable, il peut s'avérer avantageux d'utiliser la même matière pour réaliser le gobelet souple et le sachet, avec de préférence une épaisseur plus importante pour ledit gobelet que pour ledit sachet.

De préférence, le matériau disposé dans le gobelet est un gel pâteux comportant des matières actives anti-oxydante et/ou phytosanitaire, ledit gel pâteux étant de préférence soluble dans l'eau ; en variante, le matériau disposé dans le gobelet est une ouate humide, éventuellement imprégnée de matières actives anti-oxydante et/ou phytosanitaire.

Selon un mode de réalisation avantageux, l'étape e) d'injection d'un mélange gazeux et d'obturation du sachet consiste à injecter du mélange dans le sachet ouvert à ses deux extrémités par l'extrémité inférieure de celuici, à thermosceller le bord supérieur du sachet, et à poursuivre l'injection pour gonfler ledit sachet jusqu'à ce qu'on thermoscelle le bord inférieur de celui-ci ; en particulier, on injecte un mélange prédéterminé d'oxygène, d'azote et de gaz carbonique, dont la densité est proche de celle de l'air.

L'invention concerne également un article emballé, obtenu à partir d'un bouquet de fleurs coupées, en particulier des roses, en mettant en oeuvre un procédé présentant l'une au moins des caractéristiques précitées : l'article emballé est plus particulièrement remarquable en ce qu'il comporte un petit gobelet entourant l'extrémité inférieure des tiges et contenant un matériau fibreux, liquide, ou pâteux apte à préserver l'humidité et favoriser la conservation, et un sachet enveloppant l'ensemble du bouquet, la portion inférieure du sachet étant appliquée étroitement contre la surface extérieure dudit gobelet de façon à définir un volume avec le bord supérieur thermoscellé dudit sachet qui renferme ainsi une atmosphère contrôlée favorable à la conservation des fleurs.

En particulier, il peut être prévu que le gobelet est rigide et a la forme d'un tube, et que la portion inférieure du sachet entoure étroitement la surface extérieure dudit tube, de préférence en enveloppant également le rebord supérieur de celui-ci, ou encore, en variante, que le gobelet est souple et thermorétracté, et que la portion inférieure du sachet entoure étroitement la surface extérieure dudit gobelet.

Dans les deux cas, on pourra utiliser la caractéristique avantageuse selon laquelle la portion inférieure du sachet est entourée d'un manchon cylindrique thermorétracté appliquant étroitement ladite portion contre le gobelet.

D'autres caractéristiques et avantages de l'invention ressortiront plus clairement de la description qui va suivre et du dessin annexé, concernant un mode de réalisation préférentiel, en référence aux figures où :

    - la figure 1 illustre schématiquement les étapes successives a) à f) du procédé de l'invention, l'étape f) pouvant en variante être remplacée par une étape f') lorsque l'on utilise un sachet réalisé à partir d'une matière qui n'est pas thermorétractable,

    - la figure 2 illustre schématiquement une variante des étapes a) à f) (ou f')) précédentes, dans laquelle le gobelet utilisé n'est pas rigide, mais souple et thermorétractable, ce qui explique la présence d'une nouvelle étape intermédiaire r) dans le procédé.

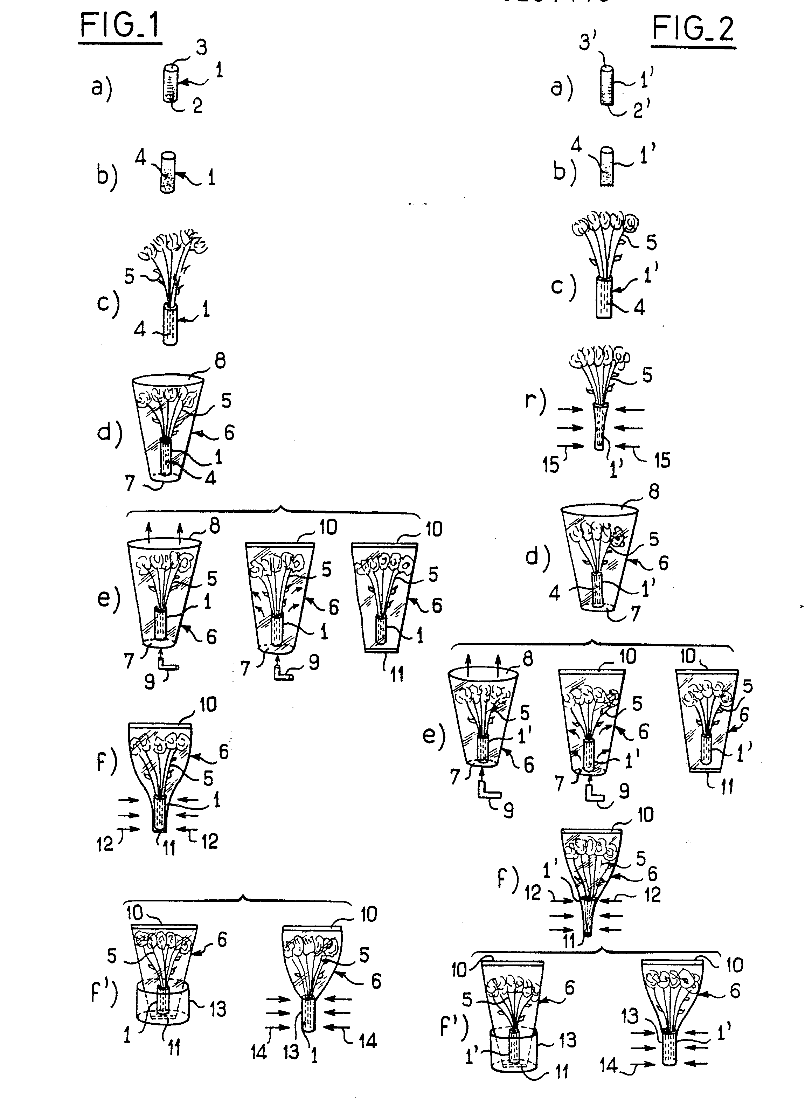

Examinons plus en détail les différentes étapes successives a) à f) représentées à la figure 1 pour illustrer le déroulement du procédé d'emballage de fleurs coupées conforme à l'invention.

En a), on met en place un petit gobelet 1 fermé à son extrémité inférieure. Dans la variante de la figure 1, il s'agit d'un gobelet rigide ou semi-rigide, de forme essentiellement cylindrique ou tronconique, avec un fond 2 et une ouverture supérieure 3. Ce gobelet peut être réalisé en matière plastique telle que polychlorure de vinyle ou polycarbonate, ou encore en carton ou en aluminium. Ses dimensions seront adaptées à la fois au nombre de fleurs coupées à emballer, et au matériau qui doit être disposé dans le gobelet dans la phase suivante. A titre indicatif, on pourra prévoir un gobelet tubulaire d'environ 7 à 8 cm. de diamètre, et de 16 à 20 cm. de hauteur.

Lors de l'étape b), on dispose dans le gobelet 1 un matériau fibreux, liquide, ou pâteux 4 apte à communiquer aux plantes une bonne humidité tout en favorisant leur conservation. Ce matériau aura de préférence un effet conservateur, et humidificateur ou hydrateur pour les tiges des fleurs coupées. Plus généralement, on pourra prévoir un réducteur ou un anti-oxydant, ou toute substance analogue bloquant ou ralentissant l'évolution de la fleur, ainsi qu'une matière active, en particulier une matière phytosanitaire anti-cryptogamique. Le matériau 4 disposé dans le gobelet 1 peut être un gel pâteux, ou une ouate humide, avec naturellement les possibilités précédentes d'imprégnation de matières actives anti-oxydante et/ou phytosanitaire. Il est inutile de décrire plus en détail de telles compositions pâteuses, semi-pâteuses ou fibreuses qui sont bien connues de l'homme du métier. On pourrait aussi se contenter d'utiliser tout simplement de l'eau avec des additifs connus, mais avec des résultats moins bons quant à la qualité et la durée de la conservation.

Dans l'étape c), on met en place les tiges des fleurs coupées à emballer dans le gobelet 1 ainsi garni du matériau 4. La quantité prévue pour ledit matériau sera telle que sa surface supérieure libre, une fois que les tiges des fleurs sont disposées dans le gobelet, affleure pratiquement le bord supérieur dudit gobelet.

Lors de l'étape d), on dispose autour de l'ensemble un grand sachet 6 en forme de manchon ouvert à ses extrémités inférieure 7 et supérieure 8. Ce sachet est réalisé en matière plastique thermosoudable et présentant une bonne résistance à la perforation. Ainsi qu'on le verra par la suite, le sachet 6 est réalisé à partir d'un film plastique mince, qui est thermorétractable ou non. Le sachet 6 peut présenter une forme cylindrique, ou encore une forme tronconique lui permettant de s'adapter à la forme naturelle du bouquet de fleurs coupées 5. A titre indicatif, on pourra prévoir un sachet présentant environ 80 à 90 cm. de hauteur, et environ 10 et 20 cm. pour les bases du trapèze que forme le sachet à plat. L'extrémité inférieure 7 du sachet 6 a été volontairement exagérée en dimension, afin de clarifier le dessin, mais il va de soi que cette extrémité sera dans la pratique choisie comparable au diamètre extérieur du gobelet 1 avec un sachet tronconique.

Lors de l'étape e), on injecte dans le sachet 6 qui enveloppe le gobelet 1 en s'étendant au-dessus des fleurs du bouquet 5, un mélange gazeux inerte favorisant la conservation, et on obture ledit sachet. L'étape e) est ici illustrée en trois phases successives. On commence par disposer une buse 9 sous l'extrémité inférieure 7 du sachet 6 de façon à chasser l'air contenu à l'intérieur dudit sachet : dans cette première phase, l'extrémité supérieure 8 du sachet est toujours ouverte, de sorte que le mélange gazeux traverse complétement ledit sachet. Dans une deuxième phase, on thermoscelle le bord supérieur 10 du sachet 6 tout en continuant à injecter le mélange gazeux par la buse 9, ce qui est représenté à l'intérieur du sachet pour faire bien comprendre que ledit sachet subit dans cette phase un gonflement, en évitant cependant toute surpression. Dans une troisième phase enfin, on thermoscelle le bord inférieur 11 du sachet 6, et l'injection du mélange gazeux est arrêtée. On obtient alors à l'issue de cette étape e) une enveloppe entourant de façon étanche, en le protégeant dans une atmosphère contrôlée, le bouquet de fleurs coupées 5. L'atmosphère contrôlée comporte avantageusement de l'oxygène, du dioxyde de carbone, et de l'azote, qui sont les constituants principaux de l'air ambiant, et dont les rapports sont modifiés afin d'allonger la durée de conservation des fleurs coupées. La densité du mélange gazeux est de préférence voisine de celle de l'air, et on utilise un balayage pour gonfler le sachet qui représente environ deux à trois fois le volume dudit sachet. On peut en particulier utiliser un mélange gazeux tout préparé, tel que celui commercialisé sous la marque ALIGAL®.

L'étape suivante,permettant d'aboutir à l'emballage final,peut différer selon que le sachet 6 est réalisé à partir d'un film thermorétractable ou non. En effet, selon une caractéristique essentielle du procédé de l'invention, il est prévu d'appliquer, de préférence en utilisant une technique de thermorétraction, la portion inférieure du sachet 6 sur le gobelet 1, de façon à conférer à la base du bouquet la tenue mécanique désirée.

L'étape illustrée en f) correspond à un sachet réalisé à partir d'un film plastique thermorétractable, par exemple en polychlorure de vinyle, ou polycarbonate, ou polypropylène. Le choix du matériau sera guidé par la résistance mécanique, la résistance aux perforations du fait des épines des fleurs concernées, et enfin naturellement par le prix. D'une façon générale, il est avantageux de choisir un matériau présentant une température de rétraction aussi basse que possible, ce autant pour préserver les tiges que pour éviter des modifications des propriétés du matériau 4 contenu dans le gobelet. On dispose ainsi l'ensemble dans un four tunnel à air ou une enceinte à eau chaude (non représenté), de telle façon que des calories soient apportées à la portion inférieure du sachet 6, portion correspondant sensiblement à la hauteur du gobelet 1. La portion inférieure du sachet se rétracte alors sur le gobelet, comme indiqué à la figure f) sur laquelle la rétraction est schématisée par le flèches 12. On confère finalement une excellente étanchéité, aussi bien pour le mélange gazeux de conservation qui a été injecté, que pour la vapeur d'eau et les différents constituants qu'apporte le matériau 4. Il est aisé de comprendre que l'article ainsi emballé non seulement favorise la conservation des fleurs coupées arrangées en bouquet, mais facilite également le transport, car ces fleurs restent protégées contre les chocs grâce au gonflement du sachet, ce qui permet un empilement de plusieurs emballages sans risque d'abîmer les fleurs.

En variante, lorsqu'on utilise un sachet 6 réalisé à partir d'un film plastique mince non-thermorétractable, on utilise alors un manchon thermorétractable pour réaliser l'application de la portion inférieure du sachet sur le gobelet 1. Cette variante est illustrée selon l'étape f') : on met d'abord en place un manchon thermorétractable 13, dont la hauteur est de préférence comparable à celle du gobelet 1, puis on provoque alors la thermoré traction de ce manchon (symbolisée par les flèches 14), ce qui réalise instantanément une application étroite de la portion inférieure du sachet 6 sur le gobelet 1 de façon comparable au processus de l'étape f) précitée. Ce manchon thermorétractable 13 pourra être du type tronçon de gaine, généralement en chlorure de polyvinyle, ce tronçon étant de préférence étiré essentiellement dans le sens du périmètre de l'objet à revêtir, de façon à acquérir une mémoire ou pourcentage dé rétraction beaucoup plus importante dans le sens radial que dans le sens longitudinal. De tels films sont classiquement imprimés et/ou décorés. D'ailleurs, on pourra encore améliorer l'effet esthétique en mettant en place un ruban ou analogue entre le sachet 6 et le manchon 13 avant la thermorétraction de celui-ci, le maintien dudit ruban étant automatiquement assuré lors du retrait dudit manchon. A titre indicatif, on pourra notamment utiliser pour réaliser le sachet 6 un film présentant une très faible perméabilité à la vapeur d'eau et au gaz constituant le mélange gazeux à injecter dans le sachet, et par exemple un film réalisé en polyester barrière transparent, tel que celui commercialisé sous la marque TERPHANE DX22® ou DX24®, ces films récents étant actuellement commercialisés pour favoriser une durée de conservation des produits alimentaires, en particulier des salades, nettement prolongée.

Ainsi que cela a été dit plus haut, le petit gobelet utilisé au début du processus d'emballage n'est pas nécessairement rigide ou semi-rigide, mais peut en variante être en matière souple et thermorétractable, de préférence en choisissant une matière présentant un coefficient de retrait élevé, avec une température de ramollissement moyenne, telle que du polychlorure de vinyle. Cette variante du procédé de l'invention est illustrée sur la figure 2, pour laquelle les éléments identiques portent les mêmes références qu'à la figure 1.

A l'étape a), on met en place un gobelet souple 1' qui a la forme d'un petit sac, ce gobelet présentant une fermeture selon son bord inférieur 2', et étant ouvert à son extrémité supérieure 3'. Le gobelet 1' présente à plat une forme sensiblement trapézoïdale ou rectangulaire, avec environ 20 cm. de hauteur et 4 à 5 cm. de largeur pour le bord fermé.

Les étapes b) et c) sont analogues à celles décrites en regard de la figure 1 : en b), on dispose dans le gobelet 1' un matériau fibreux ou pâteux 4 apte à communiquer aux plantes une bonne humidité tout en favorisant leur conservation, et, en c), on met en place les tiges des fleurs coupées 5 à emballer dans le gobelet 1' ainsi garni.

On arrive maintenant à une étape r) qui constitue la différence essentielle par rapport au procédé illustré à la figure 1. En effet, entre les étapes c) et d) précitées, on procède à une étape de thermorétraction du gobelet 1', ce qui rigidifie la base du bouquet 5 tout en assurant un bon contact entre les tiges et le matériau 4 disposé dans ledit gobelet. La thermorétraction est,comme précédemment, schématisée sur la figure par les flèches 15. Cette variante pourra être préférée à la précédente, car la quantité nécessaire de matériau 4 devient plus faible en volume, avec un bon contact entre le matériau et les tiges adjacentes, et de plus lesdites tiges bénéficient à la fin de l'étape r) d'une excellente tenue mécanique, ce que ne permettait pas d'avoir le gobelet rigide 1 à l'issue de l'étape c) illustrée à la figure 1.

La suite du processus est tout à fait analogue à ce qui a été décrit précédemment, de sorte qu'on se limitera à en rappeler les caractéristiques essentielles aboutissant à l'article emballé.

A l'étape d), on dispose autour de l'ensemble un grand sachet 6 en forme de manchon ouvert à ses extrémités inférieure et supérieure 7, 8, ledit sachet enveloppant ainsi ledit ensemble en s'étendant au-dessus des fleurs du bouquet. Ensuite, lors de l'étape e), on injecte dans le sachet 6 un mélange gazeux inerte favorisant la conservation, et on obture ledit sachet en thermoscellant ses bords supérieur 10 et inférieur 11, de façon à emprisonner l'ensemble dans une atmosphère contrôlée.

Comme précédemment, la phase finale au cours de laquelle on applique la portion inférieure du sachet 6 sur le gobelet 1' diffère selon qu'on utilise un sachet réalisé à partir d'un film plastique thermorétractable ou non.

L'étape f) de la figure 2 illustre le cas d'un sachet réalisé à partir d'un film plastique thermorétractable, de sorte que l'application de la portion inférieure du sachet sur le gobelet 1' est obtenue par thermorétraction de ladite portion elle-même, comme symbolisé par les flèches 12. Ainsi, dans ce cas, on utilise un gobelet 1' et un sachet 6 qui sont thermorétractables : il est avantageux de prévoir la meme matière constituant le film de départ pour réaliser le gobelet souple et le sachet, mais il conviendra dans ce cas de prévoir une épaisseur suffisante pour le film constitutif du gobelet, ceci pour une résistance suffisante à la perforation (on pourra par exemple choisir une épaisseur de 25 à 50 µ pour le film constitutif du sachet, et une épaisseur de 50 à 100 µ pour le film constitutif du gobelet).

En variante, lorsque l'on utilise un sachet 6 réalisé à partir d'un film plastique mince non-thermorétractable, on utilise, comme précédemment, un manchon thermorétractable 13 enfilé autour de l'extrémité inférieure de l'ensemble gonflé et thermoscellé obtenu à la fin de l'étape e). Après la mise en place du manchon thermorétractable 13, dont la hauteur est de préférence comparable à celle du gobelet 1', l'application de la portion inférieure du sachet 6 sur le gobelet 1' lors de l'étape f') ainsi modifiée est alors obtenue par thermorétraction dudit manchon, comme symbolisé par les flèches 14.

L'invention concerne également un article emballé, obtenu à partir d'un bouquet de fleurs coupées 5, en particulier des roses, en mettant en oeuvre un procédé conforme à la description qui précède. Cet article comporte ainsi un petit gobelet 1 ou 1' entourant l'extrémité inférieure des tiges et contenant un matériau fibreux, liquide ou pâteux 4 apte à préserver l'humidité et favoriser la conservation, et un sachet 6 enveloppant l'ensemble du bouquet, la portion inférieure du sachet étant appliquée étroitement contre la surface extérieure dudit gobelet de façon à définir un volume avec le bord supérieur 10 thermoscellé dudit sachet qui renferme ainsi une atmosphère contrôlée favorable à la conservation des fleurs. L'article emballé peut comporter un gobelet 1 rigide en forme de tube, auquel cas la portion inférieure du sachet 6 entoure étroitement la surface extérieure dudit tube, de préférence en enveloppant également le rebord supérieur de celui-ci. Il sera d'ailleurs avantageux de prévoir un bord supérieur arrondi pour le gobelet rigide, de façon à éviter tout risque de coupure du sachet lors de son application contre le bord. En variante de l'article emballé obtenu à l'issue de l'étape f), l'article peut être tel que la portion inférieure du sachet 6 est entourée d'un manchon cylindrique 13 thermorétracté, résultant de l'étape f').

L'article emballé peut comporter un gobelet 1' qui est souple et thermorétracté, la portion inférieure du sachet 6 entourant alors étroitement la surface extérieure dudit gobelet, ainsi que cela résulte de l'étape f) de la figure 2. En variante, la portion inférieure du sachet 6 est entourée d'un manchon cylindrique 13 thermorétracté appliquant étroitement ladite portion contre le gobelet 1', ainsi que cela résulte de l'étape f') de la figure 2.

L'invention qui vient d'être décrite comporte de nombreux avantages qui ont été mentionnés plus haut, en tirant au maximum parti des techniques modernes de thermorétraction. Il convient à ce titre de noter que l'on a déjà fait appel à des tubes thermorétrécissables en polychlorure de vinyle pour protéger des tiges de fleurs coupées, mais en enfilant un tel tube autour d'une seule tige afin d'en renforcer la tenue mécanique lorsqu'il s'agit de fleurs à longue tige et tête relativement lourde (marguerites barberton par exemple) : une telle technique est par exemple décrite dans la demande de brevet français N° 2 565 563. Ce document montre qu'il est parfaitement envisageable de thermorétracter un tube sur une tige de fleur coupée , mais il ne contient aucun enseignement suggérant d'utiliser un gobelet et/ou un sachet en matière thermorétractable pour un bouquet de fleurs, comme c'est le cas dans le cadre de la présente invention.

Bien que cela ne fasse pas partie directement de l'objet de l'invention, il convient de rappeler que les fleurs coupées devront, avant d'être emballées conformément au procédé de l'invention, subir un traitement préliminaire leur conférant le plus bel aspect possible : ainsi que cela est bien connu, après la coupe, les tiges sont traitées dans des serres où elles sont stockées pendant 24 heures dans une solution conservatrice à 2°C environ (cette solution comportant un anti-oxydant et/ou un réducteur) ; ensuite, à l'arrivée sur la chaîne d'emballage, les fleurs coupées subissent un traitement fongicide par pulvérisation d'air comprimé avec de l'eau et un produit dilué évitant en particulier un développement cryptogamique, après quoi on procède à une phase de séchage à l'air frais (4 à 10°C).

Le procédé d'emballage de l'invention convient particulièrement bien pour le transport et la conservation des roses coupées ; il est simple et apte à une mise en oeuvre en continu sur une chaîne d'emballage. Par ailleurs, le procédé permet subsidiairement de préserver un caractère esthétique dans la présentation du bouquet, grâce à un emballage rappelant, par sa forme finale, celui que le fleuriste met en place manuellement.

L'invention n'est pas limitée au mode de réalisation qui vient d'être décrit, mais englobe au contraire toute variante reprenant, avec des moyens équivalents, les caractéristiques essentielles figurant aux revendications.

En particulier, on pourra utiliser, pour l'application de la portion inférieure du sachet sur le gobelet, une technique s'apparentant seulement à une thermorétraction, avec par exemple un retrait obtenu avec un processus chimique sans variation notable de la température.

## Revendications

1. Procédé d'emballage de fleurs coupées, permettant le transport et la conservation d'une pluralité de fleurs, en particulier de roses, arrangées en bouquet, caractérisé en ce qu'il comporte les étapes suivantes :

a) on met en place un petit gobelet ou sac analogue (1, 1'), fermé à son extrémité inférieure,

b) on dispose dans le gobelet (1, 1') un matériau fibreux, liquide, ou pâteux (4) apte à communiquer aux plantes une bonne humidité tout en favorisant leur conservation,

c) on met en place les tiges des fleurs coupées (5) à emballer dans le gobelet (1, 1') ainsi garni,

d) on dispose autour de l'ensemble un grand sachet (6) en forme de manchon ouvert à ses extrémités inférieure et supérieure (7, 8), ledit sachet, réalisé en matière plastique thermosoudable et présentant une bonne résistance à la perforation, enveloppant ainsi ledit ensemble en s'étendant au-dessus des fleurs du bouquet,

e) on injecte dans le sachet (6) un mélange gazeux inerte favorisant la conservation, et on obture ledit sachet en thermoscellant ses bords supérieur et inférieur (10, 11), de façon à emprisonner l'ensemble dans une atmosphère contrôlée,

f) on applique, de préférence en utilisant une technique de thermorétraction, la portion inférieure du sachet (6) sur le gobelet (1, 1'), de façon à conférer à la base du bouquet la tenue mécanique désirée.

2. Procédé d'emballage selon la revendication 1, caractérisé par le fait qu'on utilise un gobelet (1') en matière souple et thermorétractable, de préférence du polychlorure de vinyle, et qu'entre les étapes c) et d) on procède à une étape r) de thermorétraction dudit gobelet, ce qui rigidifie la base du bouquet (5) tout en assurant un bon contact entre les tiges et le matériau (4) disposé dans le gobelet (1').

3. Procédé d'emballage selon la revendication 2, caractérisé par le fait que le gobelet (1') présente à plat une forme sensiblement rectangulaire ayant environ 20 cm. de hauteur et 4 à 5 cm. de largeur pour le côté fermé.

4. Procédé d'emballage selon la revendication 1, caractérisé par le fait qu'on utilise un gobelet (1) rigide ou semi-rigide, de forme essentiellement cylindrique ou tronconique, avec un fond (2) en partie inférieure, et que la portion inférieure du sachet (6) appliquée sur le gobelet (1) lors de l'étape f) concerne au moins la hauteur dudit gobelet.

5. Procédé d'emballage selon l'une des revendications 1 à 4, caractérisé par le fait qu'on utilise un sachet (6) réalisé à partir d'un film plastique mince, nonthermorétractable, qu'après l'étape e) on procède à la mise en place d'un manchon thermorétractable (13), dont la hauteur est de préférence comparable à celle du gobelet (1, 1'), et que l'application de la portion inférieure du sachet (6) sur le gobelet (1, 1') lors de l'étape f') ainsi modifiée est obtenue par thermorétraction dudit manchon (13).

6. Procédé d'emballage selon la revendication 5, caractérisé par le fait que le film du sachet (5) présente une très faible perméabilité à la vapeur d'eau et aux gaz constituant le mélange gazeux à injecter dans ledit sachet, et est réalisé de préférence en polyester barrière transparent.

7. Procédé d'emballage selon l'une des revendications 1 à 4, caractérisé par le fait qu'on utilise un sachet (6) réalisé à partir d'un film plastique thermorétractable, et que l'application de la portion inférieure du sachet sur le gobelet (1, 1') lors de l'étape f) est obtenue par thermorétraction de ladite portion elle-même.

8. Procédé d'emballage selon la revendication 7, caractérisé par le fait que le film du sachet (6) présente une très faible perméabilité à la vapeur d'eau et aux gaz constituant le mélange gazeux à injecter dans ledit sachet, et est réalisé de préférence en polychlorure de vinyle, polycarbonate ou polypropyléne.

9. Procédé d'emballage selon l'une des revendications 5 à 8, caractérisé par le fait que le sachet (6) présente une forme sensiblement tronconique ayant environ 80 à 90 cm. de hauteur, et environ 10 à 20 cm. pour les bases du trapèze que forme le sachet à plat.

10. Procédé d'emballage selon la revendication 2 et l'une des revendications 7 et 8, caractérisé par le fait qu'on utilise la même matière pour réaliser le gobelet souple (1') et le sachet (6), avec de préférence une épaisseur plus importante pour ledit gobelet que pour ledit sachet.

11. Procédé d'emballage selon l'une des revendications 1 à 10, caractérisé par le fait que le matériau (4) disposé dans le gobelet (1, 1') est un gel pâteux comportant des matières actives anti-oxydante et/ou phytosanitaire, ledit gel pâteux étant de préférence soluble dans l'eau.

12. Procédé d'emballage selon l'une des revendications 1 à 10, caractérisé par le fait que le matériau (4) disposé dans le gobelet (1, 1') est une ouate humide, éventuellement imprégnée de matières actives anti-oxydante et/ou phytosanitaire.

13. Procédé d'emballage selon l'une des revendications 1 à 12, caractérisé par le fait que l'étape e) d'injection d'un mélange gazeux et d'obturation du sachet (6) consiste à injecter du mélange dans le sachet ouvert à ses deux extrémités (7, 8) par l'extrémité inférieure (7) de celui-ci, à thermosceller le bord supérieur (10) du sachet, et à poursuivre l'injection pour gonfler ledit sachet jusqu'à ce qu'on thermoscelle le bord inférieur (11) de celui-ci.

14. Procédé d'emballage selon la revendication 13, caractérisé par le fait qu'on injecte un mélange prédéterminé d'oxygéne, d'azote et de gaz carbonique, dont la densité est proche de celle de l'air.

15. Article emballé, obtenu à partir d'un bouquet de fleurs coupées (5), en particulier des roses, en mettant en oeuvre un procédé selon l'une des revendications précédentes, caractérisé par le fait qu'il comporte un petit gobelet (1, 1′) entourant l'extrémité inférieure des tiges et contenant un matériau fibreux, liquide ou pateux (4) apte à préserver l'humidité et favoriser la conservation, et un sachet (6) enveloppant l'ensemble du bouquet, la portion inférieure du sachet étant appliquée étroitement contre la surface extérieure dudit gobelet de façon à définir un volume avec le bord superieur (10) thermoscellé dudit sachet qui renferme ainsi une atmosphére contrôlée favorable à la conservation des fleurs.

16. Article emballé selon la revendication 15, caractérisé par le fait que le gobelet (1) est rigide et a la forme d'un tube, et que la portion inférieure du sachet (6) entoure étroitement la surface extérieure dudit tube, de préférence en enveloppant également le rebord supérieur de celui-ci.

17. Article emballé selon la revendication 15, caractérisé par le fait que le gobelet (1′) est souple et thermorétracté, et que la portion inférieure du sachet (6) entoure étroitement la surface extérieure dudit gobelet.

18. Article emballé selon l'une des revendications 16 et 17, caractérisé par le fait que la portion inférieure du sachet (6) est entourée d'un manchon cylindrique (13) thermorétracté appliquant étroitement ladite portion contre le gobelet (1, 1′).

0291413

FIG.1

FIG.2

Office européen des brevets

**RAPPORT DE RECHERCHE EUROPEENNE**

Numero de la demande

EP 88 40 1163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 774 187  (SMITHERS) --- | | B 65 B  25/02 B 65 D  85/50 |
| A | FR-A-2 286 759  (GUYARD) --- | | |
| A | FR-A-1 223 782  (GONON) ----- | | |

DOMAINES TECHNIQUES RECHERCHES (Int. Cl.4)

B 65 B
B 65 D
A 01 G

Le présent rapport a été établi pour toutes les revendications

| Lieu de la recherche | Date d'achèvement de la recherche | Examinateur |
|---|---|---|
| LA HAYE | 19-08-1988 | CLAEYS H.C.M. |